## Europäisches Patentamt
## European Patent Office
## Office européen des brevets

(19)

(11) Veröffentlichungsnummer: **0 069 956**
A1

(12) # EUROPÄISCHE PATENTANMELDUNG

(21) Anmeldenummer: 82105972.2

(22) Anmeldetag: 05.07.82

(51) Int. Cl.³: **B 60 S 3/06**

(30) Priorität: 04.07.81 DE 8119547 U

(43) Veröffentlichungstag der Anmeldung:
19.01.83 Patentblatt 83/3

(84) Benannte Vertragsstaaten:
AT BE CH DE FR IT LI LU NL SE

(71) Anmelder: LRS, LKW-Reinigungs-Service Carl Friedrich Gille
Betonstrasse 63a
D-2820 Bremen 71(DE)

(72) Erfinder: LRS, LKW-Reinigungs-Service Carl Friedrich Gille
Betonstrasse 63a
D-2820 Bremen 71(DE)

(74) Vertreter: Hoormann, Walter, Dr. et al,
FORRESTER & BOEHMERT Widenmayerstrasse 41
D-8000 München 22(DE)

(54) Fahrbare Bürstenwaschvorrichtung, insbesondere zum Waschen von LKW-Karosserien.

(57) Die Vorrichtung besitzt eine Bürstenwalze (12) und Wasch- bzw. Spülwasserzuführungen mit einem Fahrgestell (10), auf dem die Bürstenwalze (12) mit vertikaler Drehachse (14) drehbar gelagert und mittels eines Motores (15) drehbar ist.

FIG.1

EP 0 069 956 A1

Croydon Printing Company Ltd.

LRS, LKW-Reinigungs-Service, Carl Friedrich Gille,
Betonstraße 63a, 2820 Bremen 71

----------------------------------------------------

Fahrbare Bürstenwaschvorrichtung, insbesondere
zum Waschen von LKW-Karosserien

----------------------------------------------------


Die Erfindung betrifft eine Bürstenwaschvorrichtung,
insbesondere zum Waschen von LKW-Karosserien, mit
einer Bürstenwalze und Wasch- bzw. Spülwasserzuführungen.

Zum Waschen der Aufbauten von Lastkraftwagen oder Containern
stehen nach dem herkömmlichen Stand der Technik verschiedene
Verfahren zur Verfügung: Zum einen vollautomatische Waschanlagen, wie sie in ähnlicher Weise auch zum Waschen
von Personenkraftwagen eingesetzt werden, bei denen
rotierende Bürstenwalzen bei gleichzeitiger Bespritzung
mit Wasch- bzw. Spülwasser an den zu reinigenden Flächen
entlang bewegt werden. Bei derartigen bekannten Waschvorrichtungen wird die Bahn der Bürstenwalzen in der
Regel vollautomatisch der Geometrie des zu waschenden
Fahrzeuges angepaßt wozu sowohl ein aufwendiges Sensor-
System als auch umfangreiche mechanische Einrichtungen
erforderlich sind. Die gesamte Waschanlage wird in
einem eigens für diesen Zweck zu bauenden Unterstand
untergebracht, der bei Lastkraftwagen entsprechend
große geometrische Abmessungen aufweisen muß.

Natürlich lassen sich die Karosserien von Lastkraftwagen mittels an langen Stielen angebrachter Waschbürsten auch von Hand reinigen. Doch ist dieses Verfahren sehr arbeitsintensiv und damit wenig wirtschaftlich.

Die herkömmlichen Vorrichtungen zum Waschen
von LKW-Karosserien oder Containern sind also hinsichtlich ihrer Wirtschaftlichkeit verbesserungswürdig. Insbesondere sind die vollautomatischen Bürstenwaschanlagen
sehr teuer, so daß beispielsweise kleinere oder mittlere
Speditionsunternehmen sich keine derartige Waschanlage
zulegen werden, sondern ihre LKW's bei Spezialunternehmen reinigen lassen werden, wobei dann zusätzlich
auch noch Kosten für die Fahrt und die Wartezeiten anfallen. Die Nachteile der Handwäsche brauchen nicht
erläutert zu werden.

In Betracht dieser Nachteile des Standes der Technik
liegt der vorliegenden Erfindung die Aufgabe zugrunde,
eine Waschvorrichtung, insbesondere zum Waschen von
LKW-Karosserien, Containern etc., zu schaffen, die
preisgünstig ist, wenig menschliche Arbeitskraft erfordert, dezentral einsetzbar ist und eine qualitativ
gute Wäsche in kurzer Waschzeit ermöglicht.

Erfindungsgemäß wird diese Aufgabe gelöst durch ein Fahrgestell, auf dem die Bürstenwalze mit vertikaler Drehachse drehbar gelagert und mittels eines Motores drehbar ist.

Vorzugsweise bewegt sich das Fahrgestell auf vier Lenkrollen, wobei eine richtungskonstante Bockrolle für Richtungsstabilität sorgt.

Weitere Vorteile der Erfindung ergeben sich aus den Ansprüchen und der nachfolgenden Beschreibung, in der ein Ausführungsbeispiel an Hand der Zeichnung im einzelnen erläutert ist. Dabei zeigt:

Fig. 1 eine erfindungsgemäße Bürstenwaschvorrichtung in perspektivischer Darstellung;

Fig. 2 einen Horizontal-Querschnitt durch die Bürstenwaschvorrichtung in Höhe des Fahrgestells; und

Fig. 3 eine schematische Darstellung der Arbeitsweise der erfindungsgemäßen Bürstenwaschvorrichtung.

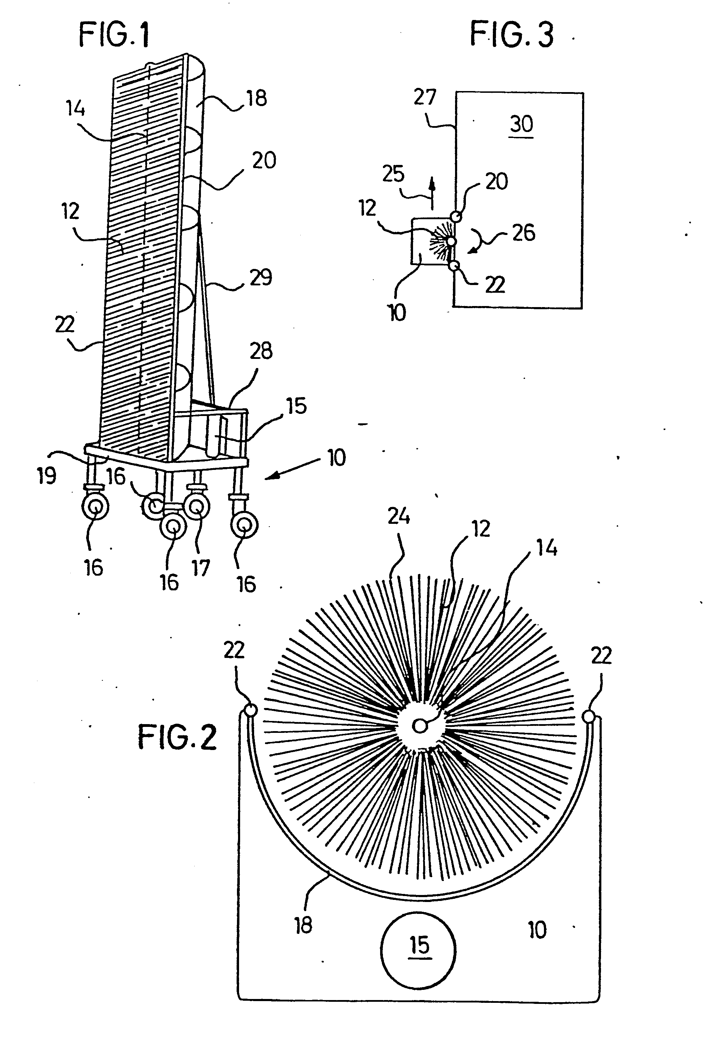

Gemäß Fig. 1 ist ein Fahrgestell 10 auf 4 Lenkrollen 16 fahrbar. Die Lenkrollen 16 sind beispielsweise frei in der Horizontalebene schwenkbar, während ein zusätzliches fünftes Rad, eine richtungsstarre Bockrolle 17, beim Vorwärtsbewegen des Fahrgestells 10 für Richtungsstabilität der Bewegung sorgt. Die Lenkrollen 16 können zum Teil arretierbar sein. Auf dem Fahrgestell 10 ist ein Geländer 28 etwa in Armhöhe der Bedienungsperson angeordnet.

Auf dem Fahrgestell 10 ist eine Bürstenwalze 12 gemäß Fig. 1 drehbar gelagert. Die Drehachse 14 der Bürstenwalze 12 erstreckt sich dabei vertikal, wobei die Drehachse 14 gemäß Fig. 2 benachbart zu einer Kante 19 des
Fahrgestells 10 angeordnet ist, so daß der Wirkkreis 24
der Bürstenwalze 12 über das Fahrgestell 10 hinausragt.
Ein Motor 15 mit beispielsweise 2,2 KW Leistung bei 160
Umdrehungen dreht die Bürstenwalze 12, wobei die Drehrichtung umkehrbar sein soll. Auf dem Fahrgestell 10
ist weiterhin ein Spritzschutz 18 vorgesehen, der die
Bürstenrolle 12 etwa halbseitig umfaßt, siehe Figuren 1
und 2. Der Spritzschutz 18 ist vorzugsweise aus durchsichtigem Material, er sorgt dafür, daß durch Zentrifugalkräfte abgespritztes Wasser nicht in unerwünschte
Richtungen gelangt. Eine Strebe 29 stabilisiert den
Spritzschutz 18. In dem dargestellten, bevorzugten
Ausführungsbeispiel   der Erfindung wird das Wasch-
bzw. Spülwasser durch am Spritzschutz 18 befestigte
Rohre 20,22 zugeführt. Die Rohre 20, 22 sind vorzugsweise aus Metall oder festem Kunststoff, während die
Wasserleitungen zur Bürstenwaschvorrichtung aus beweglichen Schläuchen bestehen. Die Rohre 20, 22 sind
mit Düsen (nicht gezeigt) zum Ausspritzen des Wassers
versehen, wobei sich gezeigt hat, das einfache Löcher
in den Rohrwänden diesen Zweck befriedigend erfüllen.
Einfache Löcher haben auch den Vorteil, daß sie bequem
zu reinigen sind. Die Düsen bzw. Löcher befinden sich
in den Rohren 20, 22 in verschiedenen Höhen, so daß
eine gleichmäßige Wasserverteilung gewährleistet ist,
vorzugsweise sind dabei in den oberen Bereichen der Rohre
20,22 mehr Löcher vorgesehen als in den unteren Abschnitten.

An Hand von Fig. 3 wird im folgenden die Wirkungsweise
der erfindungsgemäßen Bürstenwaschvorrichtung erläutert:
Das Fahrgestell 10 wird so an die Lastkraftwagenkarosserie 30, bzw. den Container, herangefahren, daß der

Wirkkreis 24 der Bürstenwalze 12 die zu reinigende
Fläche schneidet. Bei Drehung der Bürstenwalze 12 in
der Drehrichtung 26 schlagen die Borsten der Bürstenwalze 12 gegen die zu reinigende Fläche 27 der Karosserie 30, wodurch sich das Fahrgestell 10 automatisch
in Richtung des Pfeiles 25 bewegt. Die Bockrolle 17
sorgt dafür, daß die Fahrtrichtung 25 stabil bleibt
und das Fahrgestell sich nicht von der zu reinigenden
Fläche 27 entfernt. Die beiden wasch- bzw. spülwasserzuführenden Rohre 20 und 22 sind in einem bevorzugten
Ausführungsbeispiel alternativ mit Wasser beaufschlagbar. Bewegt sich das Fahrgestell 10 gemäß Fig. 3 in
Richtung des Feiles 25, so wird bevorzugt nur das
in Fahrtrichtung hinter der Bürstenwalze 12 liegende
Rohr 22 unter Wasserdruck gesetzt, doch ist es selbstverständlich, daß auch andere Anordnungen der wasserzuführenden Rohre möglich sind.

Die erfindungsgemäße, halbautomatische Bürstenwaschvorrichtung ist also von einer einzigen Bedienungsperson ohne Schwierigkeiten handhabbar, wobei die
Drehung der Bürstenwalze selbst für den nötigen Vorschub sorgt. Durch Umkehrung der Drehrichtung des
Motores ist sowohl ein Vor- als auch ein Rücklauf
entlang einer zu reinigenden Fläche möglich, wobei
die Wasserzuführung wahlweise steuerbar ist.

Die in der vorstehenden Beschreibung, den Ansprüchen
und der Zeichnung offenbarten Merkmale der Erfindung
können sowohl einzeln als auch in beliebiger Kombination für die Ausführungen des Erfindungsgedankens
wesentlich sein.

0069956

Schutzansprüche
===============

1. Bürstenwaschvorrichtung, insbesondere zum Waschen von LKW-Karosserien, mit einer Bürstenwalze und Wasch- bzw. Spülwasserzuführungen, gekennzeichnet durch ein Fahrgestell (10), auf dem die Bürstenwalze (12) mit vertikaler Drehachse (14) drehbar gelagert und mittels eines Motores (15) drehbar ist.

2. Bürstenwaschvorrichtung nach Anspruch 1, dadurch gekennzeichnet, daß das Fahrgestell (10) mit 4 Lenkrollen (16) und einer richtungskonstanten Bockrolle (17) versehen ist.

3. Bürstenwaschvorrichtung nach einem der Ansprüche 1 bis 2, dadurch gekennzeichnet, daß die Bürstenwalze (12) etwa halbseitig durch einen Spritzschutz (18) abgedeckt ist.

4. Bürstenwaschvorrichtung nach einem der vorangehenden Ansprüche, dadurch gekennzeichnet, daß die Wasch- bzw. Spülwasserzuführungen in Form von sich vertikal, parallel zur Bürstenwalzenachse erstreckenden Rohren (20,22) oder Schläuchen ausgebildet sind.

5. Bürstenwaschvorrichtung nach Anspruch 4, dadurch ge-726 kennzeichnet, daß die sich vertikal erstreckenden Rohre (20,22) im Bereich des Umfanges des Wirkungskreises (24) der Bürstenwalze (12) angeordnet sind.

6. Bürstenwaschvorrichtung nach Anspruch 5, dadurch gekennzeichnet, daß zwei sich vertikal erstreckende Rohre (20,22) in Normal-Fahrtrichtung (25) des Fahrgestells (10) vor und hinter der Bürstenwalze (12) angeordnet sind.

7. Bürstenwaschvorrichtung nach einem der vorangehenden Ansprüche, dadurch gekennzeichnet, daß die Wasch- bzw. Spülwasserzuführenden Rohre (20,22) mit Düsen versehen sind.

8. Bürstenwaschvorrichtung nach Anspruch 7, dadurch gekennzeichnet, daß die Düsen als Bohrungen in dem (oder den) Rohr(en) (20,22) ausgebildet sind.

9. Bürstenwaschvorrichtung nach Anspruch 6, dadurch gekennzeichnet, daß die zwei sich vertikal erstreckenden Rohre (20,22) alternativ oder gemeinsam mit Wasch- bzw. Spülwasser beaufschlagbar sind.

10. Bürstenwaschvorrichtung nach Anspruch 9, dadurch gekennzeichnet, daß ein Drei-Wege-Hahn vorgesehen ist.

11. Bürstenwaschvorrichtung nach einem der vorangehenden Ansprüche dadurch gekennzeichnet, daß die Drehrichtung (26) der Bürstenwalze (12) umkehrbar ist.

12. Bürstenwaschvorrichtung nach einem der vorangehenden Ansprüche, dadurch gekennzeichnet, daß die Bockrolle (17) höhenverstellbar ist.

1/1

0069956

FIG.1

FIG.3

FIG.2

Europäisches Patentamt

Patentamt

**EUROPÄISCHER RECHERCHENBERICHT**

**0069956**
Nummer der Anmeldung

EP 82 10 5972.2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 1 630 531 (RAPP & SIEWERT)  * Fig. 1 bis 3 * | 1-9 |
| | -- | |
| X | DE - U - 1 802 094 (E. FEYHL)  * Fig. 1, 2 * | 1-8 |
| | -- | |
| X | US - A - 2 804 635 (M.J. WILSON)  * Fig. 1, 8 * | 1-8 |
| | ---- | |

**KLASSIFIKATION DER ANMELDUNG (Int. Cl.³)**

B 60 S 3/06

**RECHERCHIERTE SACHGEBIETE (Int Cl.³)**

B 60 S 3/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 21-09-1982 | BECKER |

EPA form 1503.1  06.78